# NEUE EUROPÄISCHE PATENTSCHRIFT

(11) **EP 2 152 560 B2**
(45) Veröffentlichungstag und Bekanntmachung des Hinweises auf die Entscheidung über den Einspruch: **10.10.2018**
(45) Hinweis auf die Patenterteilung: 02.03.2011
(21) Anmeldenummer: 08758581.6
(22) Anmeldetag: 16.05.2008
(51) Int. Cl.: B61K 9/00, B61K 9/04, G01P 15/08

(54) **FAHRWERK EINES SCHIENENFAHRZEUGS MIT EINER VORRICHTUNG ZUR FEHLERÜBERWACHNUNG VON FAHRWERKSKOMPONENTEN**
RAIL VEHICLE CHASSIS COMPRISING A DEVICE FOR ERROR MONITORING OF CHASSIS COMPONENTS
CHÂSSIS DE VÉHICULES FERROVIAIRES COMPRENANT UN DISPOSITIF DE DÉTECTION DE DÉFAILLANCES DE COMPOSANTS DU CHÂSSIS

(30) Priorität: 22.05.2007 DE 102007024066
(43) Veröffentlichungstag der Anmeldung: 17.02.2010
(73) Patentinhaber: KNORR-BREMSE Systeme für Schienenfahrzeuge GmbH, 80809 München (DE)
(72) Erfinder: WACH, Jörg-Johannes, 81247 München (DE); SCHUHMACHER, Johannes, 81373 München (DE); HERDEN, Marc-Oliver, 81476 München (DE); MAYER, Reinhold, 85757 Karlsfeld (DE); FRIESEN, Ulf, 85579 Neubiberg (DE)
(74) Vertreter: Wiedemann, Markus
(86) Internationale Anmeldenummer: PCT/EP2008/003953
(87) Internationale Veröffentlichungsnummer: WO 2008/141774

(56) Entgegenhaltungen:
- WO-A-00/51869
- WO-A-02/47954
- WO-A-2005/105536
- WO-A1-2005/105536
- DE-A1-102005 010 118
- DE-A1-102005 010 118
- DE-C1- 19 953 677
- US-A- 6 008 731
- US-A- 6 161 962
- US-B1- 6 672 681

## Beschreibung

### Stand der Technik

Die Erfindung geht aus von einem Fahrwerk eines Schienenfahrzeugs mit einer Vorrichtung zur Fehlerüberwachung von Fahrwerkskomponenten gemäß dem Oberbegriff von Anspruch 1.

Im Schienenfahrzeugverkehr gewinnen Überwachungssysteme für Fahrwerke immer mehr an Bedeutung. Zum einen werden diese Überwachungssysteme aus Sicherheitsgründen normativ bzw. in Richtlinien gefordert. Als Beispiele sind hier folgende Systeme angeführt, die von Seiten der TSI (Technische Spezifikation für die Interoperabilität - Amtsblatt der Europäischen Gemeinschaft) für Hochgeschwindigkeitszüge europaweit gefordert werden:
- On-Board-Systeme zur Entgleisungsdetektion,
- On-Board-Systeme zur Heißläuferdetektion bzw. zur Lagerschadenerkennung,
- On-Board-Systeme zur Instabilitätserkennung bzw. von defekten Dämpfern.

Zum anderen erfolgt der Einsatz von Fahrwerksüberwachungssystemen zur Diagnose und Früherkennung von schadhaften Bauteilen, kritischen Zuständen bzw. sonstigen Fehlern, um eine frühzeitige und zustandsorientierte Wartung zu erreichen. Ziele sind dabei geringere Stillstandszeiten, eine bessere Ausnutzung von Bauteilen und damit eine Einsparung von Kosten.

So wird z.B. im ICE ein System zur Erkennung von instabilem Lauf eingesetzt und in neueren automatisch fahrenden Metros kommt ein System zur Entgleisungsdetektion zur Anwendung. Diesen Systemen ist gemeinsam, dass sie funktional für sich allein aufgebaut sind und wirken. Jedes dieser Systeme benutzt eigene Sensoren.

Für die Instabilitätserkennung werden üblicherweise ein oder mehrere Sensoren am Drehgestellrahmen montiert, welche die Querbeschleunigung (quer zur Fahrtrichtung x) in einem bestimmten Frequenzbereich messen und beim Überschreiten eines Grenzwerts eine Alarmmeldung generieren.

In der DE 101 45 433 C2 und EP 1 317 369 werden ein Verfahren und eine Vorrichtung zur Fehlerüberwachung von Komponenten eines Schienenfahrzeugs beschrieben, welche ebenfalls auf der Messung von Beschleunigungswerten beruhen, die an am Wagenkasten befestigten Schlingerdämpferkonsolen angebracht sind. Die Detektierrichtung der Beschleunigungsaufnehmer ist dort parallel zur Fahrtrichtung.

In der US-A-6 161 962 wird ein an einem Rad angeordnetes Sensormodul mit einem Beschleunigungssensor beschrieben, dessen Detektionsrichtung sich in vertikaler Richtung erstreckt.

Ein Beispiel für ein Verfahren und eine Vorrichtung zur Entgleisungsdetektion wird in der DE 199 53 677 beschrieben. Hierbei werden Messsignale eines an einem Achslager angeordneten Beschleunigungssensors direkt auswertet. Die gemessenen Beschleunigungswerte werden zweimal integriert und mit einem Grenzwert verglichen. Der einfache Beschleunigungssensor weist eine in Richtung der Hochachse (z-Richtung) des Schienenfahrzeugs verlaufende Detektionsrichtung auf. Gemäß der Schrift können aber auch Beschleunigungssensoren verwendet werden, welche Detektionsrichtungen in Fahrtrichtung (x-Richtung), quer zur Fahrtrichtung (y-Richtung) und in Richtung der Hochachse (z-Richtung) gleichzeitig aufweisen. Bei einem solchen Beschleunigungsaufnehmer handelt es sich um einen sog. Mehrfachaufnehmer, d.h. er besteht eigentlich aus wenigstens zwei, hier drei Beschleunigungsaufnehmern, von welchen jeder in einer Detektionsrichtung misst. Solche Mehrfachaufnehmer und ihre zugeordneten Auswerteeintrichtungen sind allerdings relativ teuer.

Auch die WO 00/51869 A beschreibt eine solche Vorrichtung mit jeweils mehreren Beschleunigungssensoren wie auch die WO 2005/105536 offenbart, dass Schwingungen in der vertikalen und in der horizontalen Ebene eines Rades von zwei orthogonal angeordneten Beschleunigungsaufnehmern gemessen werden.

Eine weitere Möglichkeit zur Detektion einer Entgleisung liefert ein pneumatisches Überwachungsgerät, welches rein pneumatisch arbeitet. Grundlage für eine solche Überwachungsvorrichtung ist die UIC541-08 "Entgleisungsdetektoren für Güterwagen". Das Gerät befindet sich am Wagenkasten des Güterwagens und kontrolliert dabei die Vertikalbeschleunigungen. Als Sensorelement wird dabei ein Feder-Masse-Schwinger benutzt, welcher ab einem bestimmten Grenzwert ein pneumatisches Ventil öffnet.

Die Problematik bei diesen Systemen, insbesondere im Rahmen der Funktionen Instabilitätserkennung und Entgleisungsdetektion besteht in dem hohen Aufwand an Sensorik, weil eine Vielzahl von Einzelsensoren an unterschiedlichen Einbauorten verwendet wird.

Die Aufgabe der Erfindung besteht demgegenüber darin, eine Vorrichtung zur Fehlerüberwachung von Fahrwerkskomponenten von Schienenfahrzeugen derart weiter zu entwickeln, dass sie mit möglichst wenigen, einfachen und kostengünstigen Sensoren auskommt und trotzdem eine umfassende Überwachung der Fahrwerkskomponenten liefert. Neben den Einsparungen an Kosten durch eine geringere Anzahl von Sensoren und damit weniger Verkabelungsaufwand soll außerdem die Komplexität der technischen Ausrüstung reduziert werden.

Diese Aufgabe wird erfindungsgemäß durch die Merkmale von Anspruch 1 gelöst.

### Offenbarung der Erfindung

Die Erfindung basiert auf dem Gedanken, für verschiedene Funktionen der Fehlerüberwachung von Fahrwerkkomponenten von Schienenfahrzeugen wie den eingangs erläuterten Funktionen Instabilitätserkennung und Entgleisungsdetektion eine gemeinsame Sensorik zu benutzen.

Die Sensoren sind als Schwingungsaufnehmer ausgeführt, welche abhängig von ihrer erfindungsgemäßen Anordnung in Richtung der Hochachse des Schienenfahrzeugs (z-Richtung) und quer zur Fahrtrichtung (y-Richtung) detektieren können. Hierbei ist vorgesehen: Anordnung wenigstens eines Schwingungsaufnehmers an einem Drehgestellrahmen oder an einem Radsatzlager einer Achse eines Drehgestells des Schienenfahrzeugs derart, dass seine Detektionsrichtung eine Komponente senkrecht zur Fahrtrichtung (y-Richtung) und zugleich eine Komponente parallel zur Hochachse (z-Richtung) des Schienenfahrzeugs aufweist.

Dabei ergibt sich auf Grund der schrägen Ausrichtung der Detektionsrichtung des Schwingungsaufnehmers eine vektorielle Addition der Beschleunigungswerte in z-Richtung mit denen der Querbeschleunigung (y-Richtung). Die gemessenen Beschleunigungswerte sind die Summe der vektoriellen Einzelbeschleunigung der z-Richtung und y-Richtung. Schon diese Werte bilden ein Maß für die Tendenz, dass das Fahrwerk einen instabilen Fahrzustand besitzt oder entgleist ist. Eine selektivere Überwachung kann zusätzlich durch eine frequenzspezifische Beurteilung der gemessenen Beschleunigungswerte erfolgen. Die Schwingungen auf den unterschiedlichen Raumachsen treten in unterschiedlichen Frequenzbändern auf. So sind bei einem instabilen Verhalten tendenziell niedrigere Frequenzen in der Quer- und Längsrichtung anzutreffen als in der Hochachse. Bei einer Entgleisung wird durch die höheren Frequenzanteile in der Hochachse ein Überwachungskriterium gebildet. Durch die gezielte Bewertung unterschiedlicher Frequenzbänder ist damit eine selektive Überwachung auf eine instabilen Fahrzustand und Entgleisung möglich.

Eine Komponente in den genannten Richtungen (y- und z-Richtung) ist stets dann vorhanden, wenn sich der Winkel der Detektionsrichtung in der entsprechenden Ebene innerhalb eines Bereichs von 0 Grad bis 90 Grad befindet, ohne jedoch dessen Grenzen 0 Grad und 90 Grad einzuschließen. Deshalb liegt der Winkel der Detektionsrichtung in einem Bereich von 10 bis 80 Grad.

Es wird vorgeschlagen, dass die Detektionsrichtung des Schwingungsaufnehmers in einer Ebene senkrecht zur Fahrtrichtung (x-Richtung) liegt und in Bezug zur Hochachse (z-Richtung) sowie in Bezug zu einer senkrecht zur Fahrtrichtung angeordneten Achse (y-Richtung) einen Winkel in einem Bereich von 10 bis 80 Grad aufweist.

Damit ist es möglich, mit nur einem einzigen Schwingungsaufnehmer jeweils zwei zueinander senkrechte Detektionsrichtungen zu erfassen (z-Richtung und y-Richtung). Dadurch kann mit nur einem Schwingungsaufnehmer am Drehgestell durch die Überwachung der Querbeschleunigung eine Aussage hinsichtlich einer möglichen Instabilität und durch die Überwachung der Beschleunigung in Richtung der Hochachse gleichzeitig eine Aussage hinsichtlich einer möglichen Entgleisungsneigung getroffen werden.

Mit lediglich einem einzigen Schwingungsaufnehmer je Drehgestell ist der Aufwand für Herstellung, Montage und Verkabelung des Schwingsaufnehmers minimal.

Neben den genannten Überwachungsfunktionen Instabilitätserkennung und Entgleisungsdetektion können mit der erfindungsgemäßen Vorrichtung durch geeignete Auswerteverfahren und einer entsprechenden Auswerteelektronik weitere Überwachungs- und Diagnosefunktionen realisiert werden. So ist bei Anordnung der Sensorik am Drehgestellrahmen eine Überwachung der unmittelbar am Rahmen angebauten Komponenten, wie Lenker, Führungsbuchsen bzw. des Rahmens selbst möglich.

Durch die in den Unteransprüchen aufgeführten Maßnahmen sind vorteilhafte Weiterbildungen und Verbesserungen der in den unabhängigen Ansprüchen angegebenen Erfindung möglich.

Bevorzugt kann die Detektionsrichtung des Schwingungsaufnehmers in Bezug zur Hochachse (z-Richtung) sowie in Bezug zu einer senkrecht zur Fahrtrichtung angeordneten Achse (y-Richtung) einen Winkel von 45 Grad aufweisen. In diesem Fall ergeben sich gleichgewichtige Signale für die Quer- und Hochschwingungen des Drehgestells bzw. der Radsatzlager.

Vorzugsweise wird der Schwingungsaufnehmer mit einem Impulsgeber kombiniert. Die Verwendung von integrierten Sensoren, welche die Signale für die elektronische Überwachungseinheit liefern, reduziert nochmals den Aufwand für den Sensoreinbau und für die Verkabelung.

Nicht zuletzt kann wenigstens eine elektronische Auswerteeinheit der Vorrichtung zur Fehlerüberwachung von Fahrwerkskomponenten integraler Bestandteil eines Gleitschutz- und/oder Bremssteuersystems des Schienenfahrzeugs sein, wie ebenfalls in der DE 10 2005 010 118 beschrieben wird.

Genaueres geht aus der folgenden Beschreibung eines Ausführungsbeispiels hervor.

### Zeichnungen

Nachstehend ist ein Ausführungsbeispiel der Erfindung in der Zeichnung dargestellt und in der nachfolgenden Beschreibung näher erläutert. In der Zeichnung zeigt
- Fig.1: eine schematische Draufsicht auf ein Drehgestell mit einem Teil einer Vorrichtung zur Fehlerüberwachung von Fahrwerkskomponenten von Schienenfahrzeugen gemäß einer bevorzugten Ausführungsform der Erfindung;
- Fig.2: eine schematische Stirnansicht des Drehgestells von Fig.1;
- Fig.3: eine schematische Draufsicht auf ein Drehgestell mit einem Teil einer Vorrichtung zur Fehlerüberwachung von Fahrwerkskomponenten von Schienenfahrzeugen;
- Fig.4: eine schematische Stirnansicht des Drehgestells von Fig.3;
- Fig.5: eine schematische Draufsicht auf ein nicht erfindungsgemäßes Drehgestell mit einem Teil einer Vorrichtung zur Fehlerüberwachung von Fahrwerkskomponenten von Schienenfahrzeugen;
- Fig.6: eine schematische Stirnansicht des Drehgestells von Fig.5;
- Fig.7: einen schematischen Schaltplan einer Vorrichtung zur Fehlerüberwachung von Fahrwerkskomponenten von Schienenfahrzeugen gemäß Fig.5 und Fig.6.

### Beschreibung des Ausführungsbeispiels

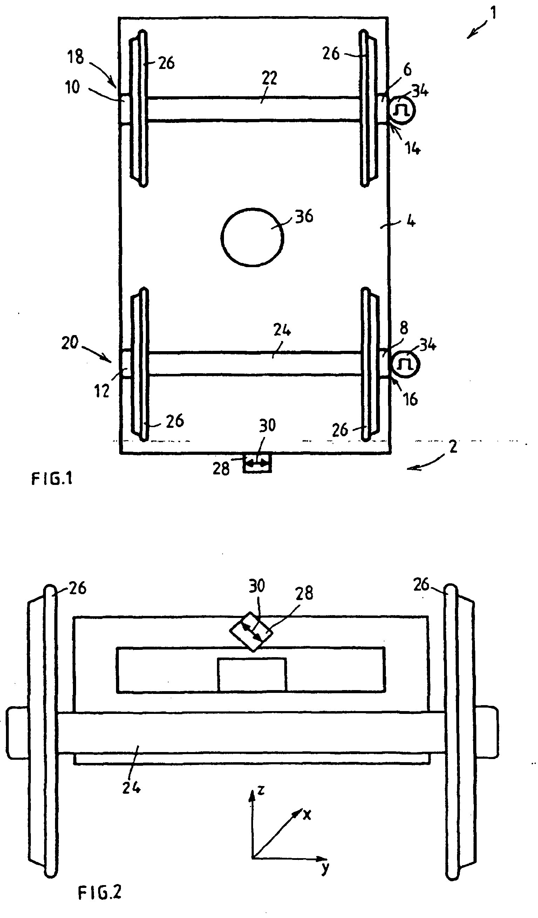

In Fig.1 ist eine schematische Draufsicht auf ein Drehgestell 1 mit einem Teil einer Vorrichtung 2 zur Fehlerüberwachung von Fahrwerkskomponenten von Schienenfahrzeugen gemäß einer ersten Ausführungsform der Erfindung dargestellt.

Das Drehgestell 1 ist in Bezug auf einen nicht dargestellten Wagenkasten um eine vertikale Drehachse 36 drehbar angeordnet und beinhaltet einen Drehgestellrahmen 4, welcher mittels eines ebenfalls nicht gezeigten, weil für die Erfindung unerheblichen sekundären Federungssystems an einem Wagenkasten des Schienenfahrzeugs abgestützt ist.

Der Drehgestellrahmen 4 stützt sich andererseits über eine Primärfederung an vier Radsatzlagergehäusen 6, 8, 10, 12 ab, in welchen je ein Radsatzlager 14, 16, 18 und 20 zur Lagerung einer Achse 22, 24 aufgenommen ist, welche endseitig zwei Räder 26 trägt. Insgesamt sind zwei Achsen 22, 24 je Drehgestell 1 vorhanden.

Zur Überwachung des Drehgestells 1 und seiner Komponenten 4 bis 20 ist die Vorrichtung 2 zur Fehlerüberwachung vorgesehen, von welcher in Fig.1 und Fig.2 lediglich ein Schwingungsaufnehmer 28 zu sehen ist.

Der Schwingungsaufnehmer 28 ist an dem Drehgestellrahmen 4 des Drehgestells derart angeordnet, dass seine durch einen Pfeil 30 symbolisierte Detektionsrichtung eine Komponente parallel zur Hochachse (z-Richtung) und eine Komponente senkrecht zur Fahrtrichtung (y-Richtung) des Schienenfahrzeugs aufweist. Die Detektionsrichtung 30 des beispielsweise als Beschleunigungssensor ausgebildeten Schwingungsaufnehmers 28 weist eine Komponente senkrecht zur Fahrtrichtung (y-Richtung) und zugleich eine Komponente parallel zur Hochachse (z-Richtung) des Schienenfahrzeugs auf, wie insbesondere aus Fig.2 hervorgeht.

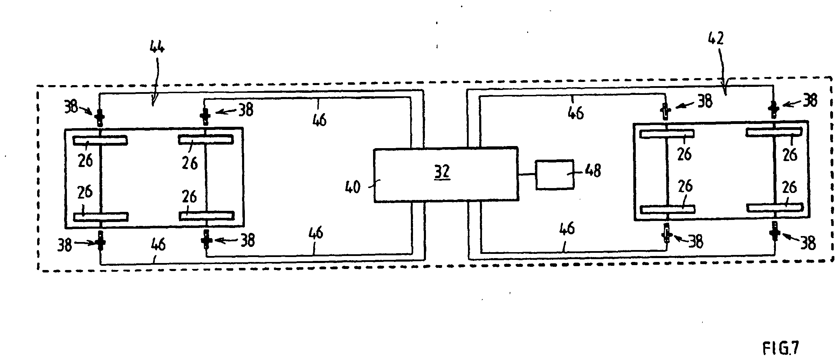

Dann ergibt sich auf Grund der schrägen Ausrichtung der Detektionsrichtung 30 des Schwingungsaufnehmers 28 eine vektorielle Addition der Beschleunigungswerte in z-Richtung mit denen der y-Richtung (Querbeschleunigung). Die momentanen Beschleunigungswerte in z-Richtung und y-Richtung werden durch eine in Fig.7 gezeigte Auswerteelektronik 32 aus den Messsignalen des Schwingungsaufnehmers 28 berechnet und bilden ein Maß für die Tendenz des Drehgestells zu entgleisen (Messsignal in z-Richtung) und/oder instabile Fahrzustände wie übermäßiges Schlingern (Messsignal in y-Richtung) einzunehmen.

Weiterhin ist jeder Achse 22, 24 ein bekannter Impulsgeber 34 zur Drehzahlmessung zugeordnet, welcher vorzugsweise in dem zugeordneten Radsatzlagergehäuse 6, 8 angeordnet oder mit eigenem Gehäuse an ein solches angeflanscht ist.

Erfindungsgemäß liegt gemäß der Ausführungsform von Fig.1 und Fig.2 die Detektionsrichtung 30 des Schwingungsaufnehmers 28 in einer Ebene senkrecht zur Fahrtrichtung (x-Richtung) und weist in Bezug zur Hochachse (z-Richtung) sowie in Bezug zu einer quer zur Fahrtrichtung angeordneten Achse (y-Richtung) einen Winkel von vorzugsweise 45 Grad auf. Weil die Komponenten in Richtung dieser Achsen dann jeweils gleich groß sind, ergeben sich bevorzugt gleichgewichtige Signale für die Quer- und Hochschwingungen des Drehgestells 1.

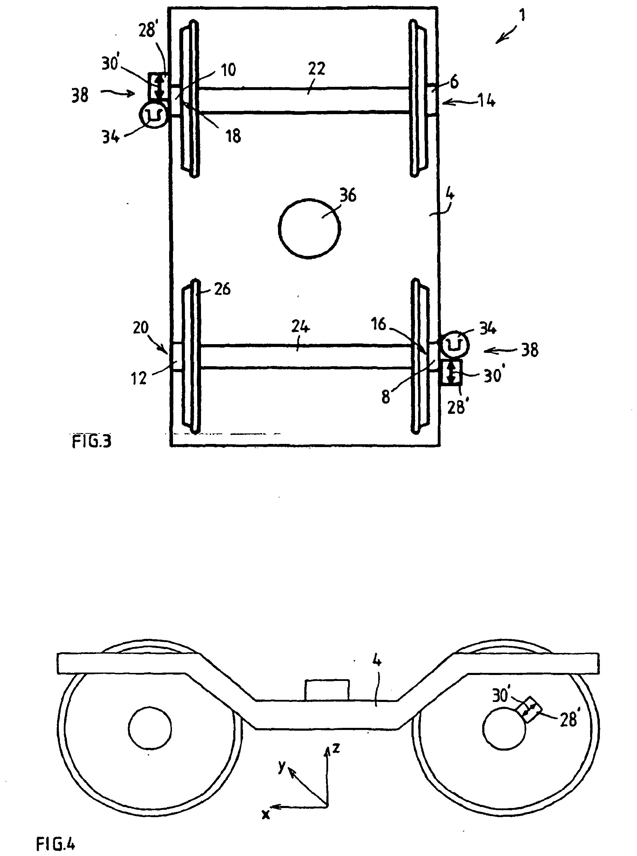

Gemäß der nicht erfindungsgemäßen Gestaltung von Fig.3 und Fig.4 ist an nur jeweils einem Radsatzlager 16, 18 der beiden Radsatzlager 16 und 20 bzw. 14 und 18 einer Achse 22, 24 ein Schwingungsaufnehmer 28' angeordnet. Wenn die Detektionsrichtungen 30' der beiden Schwingungsaufnehmer 28' gleich gerichtet sind und in einer Ebene senkrecht zu den Achsen 22, 24 des Drehgestells 1 liegen und in Bezug zur Hochachse (z-Richtung) sowie in Bezug zu einer parallel zur Fahrtrichtung angeordneten Achse (x-Richtung) vorzugsweise einen Winkel von 45 Grad aufweisen, ist es möglich, aus den Messsignalen der Schwingungsaufnehmer 28' gleichgewichtige Aussagen zur Entgleisungsneigung und zum Stabilitätsverhalten des Fahrwerks zu machen. Besonders bevorzugt werden, wie in Fig.3 gezeigt, die beiden den Achsen 22, 24 zugeordneten Schwingungsaufnehmer 28' diagonal zur vertikalen Drehachse 36 des Drehgestells 1 angeordnet. Bei dieser Ausführungsform werden die Schwingungsaufnehmer 28' zusätzlich mit jeweils einem Impulsgeber 34 zur Radgeschwindigkeitsmessung zu einem integrierten Kombinationssensor 38 zusammengefasst.

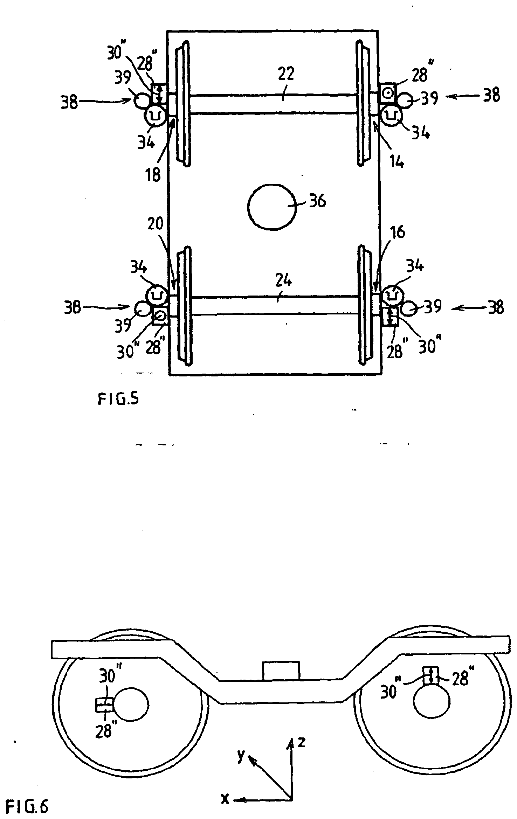

Bei der nicht erfindungsgemäßen Gestaltung von Fig.5 und Fig.6 ist jedem Radsatzlager 14 bis 20 des Drehgestells 1 ein Schwingungsaufnehmer 28" zugeordnet, wobei der Schwingungsaufnehmer 28" an dem einem Radsatzlager 16 bzw. 18 der jeweiligen Achse 24, 22 derart angeordnet ist, dass seine Detektionsrichtung 30" parallel zur Fahrtrichtung (x-Richtung) ist und von denen der andere Schwingungsaufnehmer 28" an dem anderen Radsatzlager 14 bzw. 20 der jeweiligen Achse 22, 24 derart angeordnet ist, dass seine Detektionsrichtung 30" parallel zur Hochachse (z-Richtung) des Schienenfahrzeugs ist. Demgemäß sind die Detektionsrichtungen 30" der beiden der jeweiligen Achse 22, 24 des Drehgestells 1 zugeordneten Schwingungsaufnehmer 28" jeweils senkrecht zueinander und weisen in Fahrtrichtung (x-Richtung) und in Richtung der Hochachse (z-Richtung). Bevorzugt sind daher Schwingungsaufnehmer 28" mit gleicher Detektionsrichtung 30" in Bezug zur Drehachse 36 des Drehgestells 1 diagonal angeordnet.

Vorzugsweise wird auch bei dieser Variante wenigstens ein Schwingungsaufnehmer 28" mit einem Impulsgeber 34 in einem Kombinationssensor 38 kombiniert, was die bereits oben erwähnten Vorteile mit sich bringt. Zusätzlich kann auch ein Temperatursensor 39 zur Messung der momentanen Lagertemperatur in dem jeweiligen Radsatzlager 14 bis 20 in dem Kombinationssensor 38 integriert sein.

Bei allen Ausführungsformen werden nur einfache, d.h. nur in einer Detektionsrichtung 30 wirksame Schwingungsaufnehmer 28 gleichen Typs verwendet.

### Bezugszeichenliste

- 1: Drehgestell
- 2: Vorrichtung
- 4: Drehgestellrahmen
- 6: Radsatzlagergehäuse
- 8: Radsatzlagergehäuse
- 10: Radsatzlagergehäuse
- 12: Radsatzlagergehäuse
- 14: Radsatzlager
- 16: Radsatzlager
- 18: Radsatzlager
- 20: Radsatzlager
- 22: Achse
- 24: Achse
- 26: Räder
- 28, 28', 28": Schwingungsaufnehmer
- 30, 30', 30": Detektionsrichtung
- 32: Auswerteelektronik
- 34: Impulsgeber
- 36: Drehachse
- 38: Kombinationsensor
- 39: Temperatursensor
- 40: Gleitschutzelektronik
- 42: Drehgestell
- 44: Drehgestell
- 46: Sensorleitungen
- 48: Eingabe-Ausgabe-Einrichtung

## Patentansprüche

1. Fahrwerk eines Schienenfahrzeugs mit einer Vorrichtung (2) zur Fehlerüberwachung von Fahrwerkskomponenten, beinhaltend wenigstens einen Schwingungsaufnehmer (28), **dadurch gekennzeichnet, dass** wenigstens ein Schwingungsaufnehmer (28) derart an einem Drehgestellrahmen (4) eines Drehgestells (1) des Schienenfahrzeugs angeordnet ist, dass seine Detektionsrichtung (30) eine Komponente senkrecht zur Fahrtrichtung (y-Richtung) und zugleich eine Komponente parallel zur Hochachse (z-Richtung) des Schienenfahrzeugs aufweist, wobei die Detektionsrichtung (30) des Schwingungsaufnehmers (28) in einer Ebene senkrecht zur Fahrtrichtung (x-Richtung) liegt und in Bezug zur Hochachse (z-Richtung) sowie in Bezug zu einer senkrecht zur Fahrtrichtung angeordneten Achse (y-Richtung) einen Winkel in einem Bereich von 10 bis 80 Grad aufweist.

2. Fahrwerk nach Anspruch 1, **dadurch gekennzeichnet, dass** ein einziger Schwingungsaufnehmer (28) am Drehgestellrahmen (4) des Drehgestells (1) angeordnet ist.

3. Fahrwerk nach wenigstens einem der vorhergehenden Ansprüche, **dadurch gekennzeichnet, dass** wenigstens eine elektronische Auswerteeinheit (32) der Vorrichtung (2) integraler Bestandteil eines Gleitschutz- und/oder Bremssteuersystems des Schienenfahrzeugs ist.

4. Fahrwerk nach wenigstens einem der vorhergehenden Ansprüche, **dadurch gekennzeichnet, dass** das wenigstens einige der Schwingungsaufnehmer (28) redundant vorhanden sind.

## Claims

1. Running gear of a rail vehicle with a device (2) for fault monitoring of running gear components, the device (2) comprising at least one vibration pickup (28), **characterised in that** at least one vibration pickup (28) is located on a bogie frame (4) of a bogie (1) of the rail vehicle in such a way that its detection device (30) has a component perpendicular to the travelling direction (y-direction) and at the same time a component parallel to the vertical axis (z-direction) of the rail vehicle, wherein the detection device (30) of the vibration pickup (28) lies in a plane perpendicular to the travelling direction (x-direction) and has an angle in the range of 10 to 80 degrees relative to the vertical axis (z-direction) and relative to an axis perpendicular to the travelling direction (y-direction).

2. Running gear according to claim 1, **characterised in that** a single vibration pickup (28) is located on the bogie frame (4) of the bogie (1).

3. Running gear according to one or more of the preceding claims, **characterised in that** at least one electronic evaluation unit (32) of the device (2) is an integral part of a wheel slip projection and/or brake control system of the rail vehicle.

4. Running gear according to one or more of the preceding claims, **characterised in that** at least some of the vibration pickups (28) are provided in a redundant arangement.

## Revendications

1. Châssis d'un véhicule ferroviaire comprenant un dispositif (2) de contrôle de défaillance d'éléments du châssis, comportant au moins un capteur (28) d'oscillation, **caractérisé en ce qu'**au moins un capteur (28) d'oscillation est monté sur un châssis (4) d'un boggie (1) du véhicule ferroviaire, **en ce que** sa direction (30) de détection a une composante perpendiculaire au sens de marche (direction y) et en même temps une composante parallèlement à l'axe vertical (direction z) du véhicule ferroviaire, la direction (30) de détection du capteur (28) d'oscillation étant dans un plan perpendiculaire à la direction de marche (direction x) et faisant un angle compris entre 10 et 80 degrés avec l'axe verticale (direction z) ainsi qu'avec un axe (direction y) perpendiculaire à la direction de marche.

2. Châssis d'un véhicule ferroviaire suivant la revendication 1, **caractérisé en ce qu'**un capteur (28) d'oscillation unique est monté sur le châssis (4) du boggie (1).

3. Châssis d'un véhicule ferroviaire suivant au moins l'une des revendications précédentes, **caractérisé en ce qu'**au moins une unité (32) électronique d'exploitation du dispositif (2) fait partie intégrale d'un système anti-enrayeur et/ou d'un système de commande de frein du véhicule ferroviaire.

4. Châssis d'un véhicule ferroviaire suivant au moins l'une des revendications précédentes, **caractérisé en ce qu'**il y a de manière redondante au moins certains des capteurs (28) d'oscillation.
